Europäisches Patentamt

European Patent Office

Office européen des brevets

(19)

(11) Veröffentlichungsnummer: **0 180 014 B1**

(12) **EUROPÄISCHE PATENTSCHRIFT**

(45) Veröffentlichungstag der Patentschrift: **10.04.91**

(51) Int. Cl.⁵: **H02G 3/06**, H01B 17/30

(21) Anmeldenummer: **85111464.5**

(22) Anmeldetag: **11.09.85**

(54) **Leitungseinführung für explosionsgeschützte Betriebsmittel zur zugentlasteten Einführung von nicht fest verlegten, insbesondere flexiblen Flachkabeln.**

(30) Priorität: **26.10.84 DE 3439195**

(43) Veröffentlichungstag der Anmeldung:
**07.05.86 Patentblatt 86/19**

(45) Bekanntmachung des Hinweises auf die
Patenterteilung:
**10.04.91 Patentblatt 91/15**

(84) Benannte Vertragsstaaten:
**BE DE FR GB IT NL**

(56) Entgegenhaltungen:
**DE-U- 8 135 327**
**DE-U- 8 427 559**
**US-A- 2 538 393**
**US-A- 3 052 748**

(73) Patentinhaber: **R. Stahl Fördertechnik GmbH**
**Daimlerstrasse 6**
**W-7118 Künzelsau(DE)**

(72) Erfinder: **Fünfer, Alois**
**Mühlbergstrasse 64**
**W-7118 Künzelsau-Nägelsberg(DE)**
Erfinder: **Finzel, Manfred, Dipl.-Ing. (FH)**
**Morsbacher Strasse 40D**
**W-7118 Künzelsau(DE)**

(74) Vertreter: **Rüger, Rudolf, Dr.-Ing. et al**
**Patentanwälte Dr.-Ing. R. Rüger Dipl.-Ing. H.P.**
**Barthelt Webergasse 3 Postfach 348**
**W-7300 Esslingen/Neckar(DE)**

## Beschreibung

Die Erfindung betrifft eine Leitungseinführung für explosionsgeschützte Betriebsmittel zur zugentlasteten Einführung von nicht fest verlegten, insbesondere flexiblen Flachkabeln in einen Raum der Explosions-Zündschutzart "erhöhte Sicherheit" eines elektrischen Betriebsmittels, mit einem zu Einsetzen in eine Wandöffnung des Raumes eingerichteten buchsenartigen Zwischenstutzen, der einen das Flachkabel umschließenden, verformbaren, gummielastischen Dichtring aufnimmt, sowie mit einem unter Zusammendrücken des Dichtringes in Axialrichtung mit dem Zwischenstutzen verspannbaren koaxialen Druckring und einer Zugentlastungseinrichtung.

Insbesondere flexible elektrische Zuleitungen für explosionsgeschützte Geräte, oder allgemein Betriebsmittel stellen deshalb eine besondere Gefahrenquelle dar, weil es bei einem Bruch der Zuleitungen oder einer Beschädigung deren Isolation zu Funkenbildung und damit zu einer Zündung der umgebenden explosiblen Atmosphäre kommen kann. Es müssen deshalb in den besonders gefährdeten Bereichen, d.h. an oder in der Nähe der Einführungsstelle in den Anschlußraum, besondere Sicherheitsmaßnahmen ergriffen werden, die den Vorschriften von DIN EN 50 014, Ziffer 15, genügen. Diese Vorschriften stellen die Forderungen auf, daß die Einführungen für Kabel oder Leitungen das Durchführen durch die den Anschlußraum begrenzende Gehäusewand ohne Beschädigung des Kabels oder der Leitung sicherstellen und erforderlichenfalls die Zugentlastung des Kabels oder der Leitung gewährleisten müssen. Es muß verhindert werden, daß auf das Kabel oder die Leitung ausgeübte Zug- oder Drehbeanspruchungen auf die Anschlüsse übertragen werden oder ein scharfkantiges Abbiegen des Kabels oder der Leitung an der Einführungsstelle auftreten kann. Die Einführung muß Wasser und Staub von dem Anschlußraum fernhalten und die Leitung oder das Kabel gegen Herausziehen und Verdrehen sichern.

Für Rundkabel sind schon Leitungseinführungen für explosionsgeschützte Betriebsmittel bekannt geworden (DE-OS 21 14 450), die diesen Anforderungen genügen. Diese Einführungen sind aber für Flachkabel nicht geeignet, weil ein Flachkabel an der Einführung derart fixiert werden muß, daß es in der biegegünstigsten Lage steht. Bei den bekannten Einführungen wird der ein Gewinde tragende Druckring in das mit einem Innengewinde versehene Zwischenstück eingeschraubt, wobei der innenliegende Dichtring zusammengedrückt wird, um die Abdichtung und häufig auch die Zugentlastung zu bewirken. Bei diesem Verdrehen des Druckringes gegen den Dichtring läßt sich häufig nicht verhindern, daß die auf dem Dichtring aufliegenden metallischen Druckscheiben mitgedreht werden, was bei Flachkabeln zu einer Beschädigung der Kabelisolation führen kann. Auch reicht die erzielbare Klemmwirkung häufig nicht aus.

Bei einer aus der US-A-2538 393 bekannten Leitungseinführung zur zugentlasteten Einführung insbesondere von Panzerkabeln in Kabelendverschlüsse und dergl. wird ein aus aufgewickelten Lagen eines Isolierbandes etc. bestehendes, das Kabel umschließendes, elastisches Dichtelement durch zwei halbzylindrische Druckschalen zusammengedrückt, die mit konischen, angeformten Schürzen auf einer Konusfläche eines Zwischenstückes abgestützt sind und damit auch radial nach innen gegen das Kabel verspannt werden. Diese beiden Halbschalen sind durch zwei achsparallele, zylindrische Schraubenbolzen mit dem Zwischenstutzen verbunden, die radial außerhalb des Dichtelementes auf einem gemeinsamen Teilkreis liegend angeordnet sind. Diese Leitungseinführung ist aber für elastische Flachkabel weder bestimmt noch geeignet. Bei einer aus der DE-U-81 35 327 bekannten Kabelverschraubung für Flachkabel ist als Dichtelement ein das Flachkabel umschließender elastischer Dichtring vorgesehen. Vorkehrungen, um das Flachkabel in einer den jeweiligen Einsatzbedingungen entsprechenden, besonders biegegünstigen Lage einzuführen, sind nicht getroffen.

Aufgabe der Erfindung ist es deshalb, eine Leitungseinführung für explosionsgeschützte Betriebsmittel zur zugentlasteten Einführung von nicht fest verlegten, insbesondere flexiblen Flachkabeln in biegegünstiger Lage in einen Anschlußraum der Explosions-Zündschutzart "erhöhte Sicherheit" zu schaffen, die den vorgenannten Anforderungen entspricht und sich dadurch auszeichnet, daß sie bei einfacher, robuster Bauart leicht zu montieren und raumsparend sowie wirtschaftlich herstellbar ist.

Zur Lösung dieser Aufgabe ist die eingangs genannte Leitungseinführung erfindungsgemäß durch die Merkmale des Patentanspruchs 1 gekennzeichnet.

Bei dieser Leitungseinführung wird der Zwischenstutzen vor dem Festklemmen des Leitungskabels in die Wandöffnung des Anschlußraumes eingeschraubt und dort fixiert. Dabei treten keine montagebedingten Verdrillmomente auf, die das Flachkabel beschädigen könnten, weil der Dichtring und der Druckring mit dem Zwischenstutzen noch unverbunden sind. Erst nachdem der Zwischenstutzen montiert ist, wird der Druckring mittels der Schraubenbolzen mit dem nun ortsfesten Zwischenstutzen in einer solchen gegenseitigen Verdrehstellung verschraubt, daß die Flachkabelleitung in der biegegünstigsten Stellung steht. Dabei kann über die rings um den Dichtring verteilt angeordneten Schraubenbolzen eine praktisch beliebig große Druckkraft über den Druckring auf den elastomeren Dichtring ausgeübt werden, mit dem Ergebnis, daß eine einwandfreie Abdichtung und Klemmwirkung durch den Dichtring erzielbar sind. Da die Schraubenbolzen auf einem gemeinsamen Teilkreis liegen, kann der Druckring mit dem Zwischenstück in jeder Drehwinkelstellung verspannt werden, in der die Gewindebolzen in miteinander fluchtende Bohrungen des Druckringes und des Zwischenstutzens eingeschraubt werden können. Um das Flachkabel möglichst genau in seine biegegünstigste Stellung bringen zu können, weist der Druckring oder der Zwischenstutzen zusätzliche Bohrungen zur Aufnahme von Schraubenbolzen auf.

Besonders einfache konstruktive Verhältnisse ergeben sich, wenn der Druckring einen Ringflansch aufweist, in dem Bohrungen zur Aufnahme der Schraubenbolzen angeordnet sind. Da der Druckring in der jeweils zweckmäßigen Verdrehlage zu dem Zwischenstutzen an diesem befestigt werden kann, ist die Anordnung derart getroffen, daß der Druckring unmittelbar die Zugentlastungseinrichtung trägt. Diese kann in einer bevorzugten Ausführungsform zwei einander gegenüberliegend angeordnete, den Schmalseiten des durchgehenden Flachkabels benachbarte schmale Lagerstege tragen, an denen zwei das Flachkabel zwischen sich halternde Klemmstücke befestigt, bspw. festgeschraubt, sind. Diese Lagerstege können in ihrer Stärke auf die Dicke des Flachkabels abgestimmt sein, so daß sie zugleich als Anschläge für die Klemmstücke wirken und damit ein zu starkes Klemmen und Beschädigen der Isolation des Flachkabels verhüten.

Außerdem können die flachen, leistenartigen Klemmstücke auf ihrer dem Flachkabel zugewandten Seite abgeschrägte oder abgerundete Randflächen aufweisen, durch die ein scharfkantiges Abbiegen des Flachkabels verhindert wird.

Da das Zwischenstück unbehindert von dem durchgehenden Flachkabel montiert werden kann, kann es durch eine aufgeschraubte Kontermutter oder andere Maßnahmen, bspw. durch Verkörnen, drehfest an dem Betriebsmittel fixiert sein, bevor der Druckring in der beschriebenen Weise mittels der Schraubenbolzen mit ihm verspannt wird.

In der Zeichnung ist ein Ausführungsbeispiel des Gegenstandes der Erfindung dargestellt. Es zeigen:

Fig. 1    eine Leitungseinführung gemäß der Erfindung, in einer Seitenansicht,

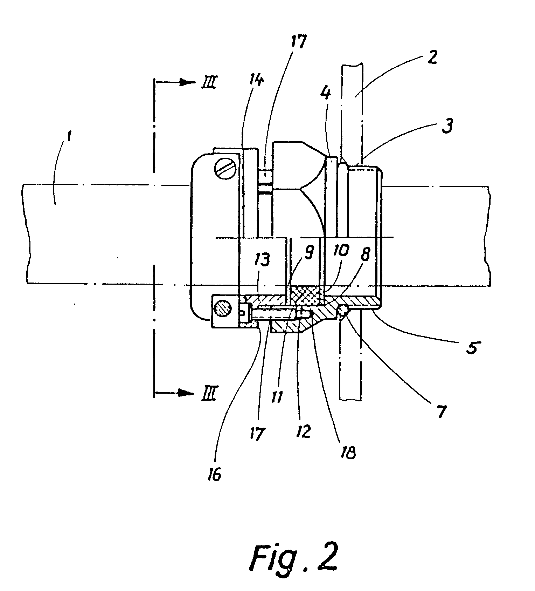

Fig. 2    die Leitungseinführung nach Fig. 1, teilweise im axialen Schnitt, in einer Seitenansicht, und

Fig. 3    die Leitungseinführung nach Fig. 1, geschnitten längs der Linie III-III der Fig. 2.

Die in den Figuren dargestellte Leitungseinführung dient zum Einführen eines insbesondere flexiblen, nicht fest verlegten elektrischen Flachkabels 1 in einen Anschlußraum der Explosions-Zündschutzart "erhöhte Sicherheit" eines elektrischen Betriebsmittels, bspw. eines ortsbeweglichen Hebezeuges. Von dem Anschlußraum ist in der Zeichnung lediglich eine Begrenzungswand 2 angedeutet, die eine Gewindebohrung 3 aufweist, in die ein buchsenartiger Zwischenstutzen 4 mittels eines Außengewindes 5 eingeschraubt ist. Der eingeschraubte Zwischenstutzen 4 ist bspw. mittels Metallkleber oder einer aufgeschraubten Kontermutter 6 gesichert. Ein dazwischengelegter Dichtring 7 verhindert das Eindringen von Staub und Wasser am Gewinde 3 des Zwischenstutzens 4 in den Anschlußraum.

In dem Zwischenstutzen 4 ist eine Ringschulter 8 ausgebildet, auf der ein zwischen Druckscheiben 9, 10 aus widerstandsfähigem Material, bspw. Stahl, liegender verformbarer, gummielastischer Dichtring 11 sitzt, der eine der Umrißgestalt des Flachkabels 1 angepaßte längliche Durchgangsöffnung aufweist. Der Dichtring 11 liegt seitlich an der glatten Wandung einer zylindrischen Bohrung 12 des Zwischenstutzens 4 an, in die ein zylindrischer, glattwandiger Druckring 13 eingeschoben ist, der an seinem außerhalb des Zwischenstutzens 4 liegenden Ende einen Ringflansch 14 trägt.

In dem über den Druckring 13 radial vorstehenden Ringflansch 14 sind auf einem gleichen Teilkreis 15 in gleichen Abständen angeordnete Durchgangsbohrungen 16 für zylindrische Schraubenbolzen 17 angeordnet, denen ebenfalls auf dem gleichen Teilkreis liegende Gewindebohrungen 18 in der benachbarten Stirnfläche des Zwischenstutzens 4 fluchtend zugeordnet sind. Die Anordnung kann dabei derart getroffen sein, daß bspw. die Zahl der Gewindebohrungen 18 größer als die der Bohrungen 17 in dem Ringflansch 14 ist, so daß der Druckring 13 mittels der Schraubenbolzen 17 feinfühlig in einer Vielzahl frei wählbarer Drehwinkelstellungen bezüglich des Zwischenstutzens 4 mit diesem axial verspannt werden kann.

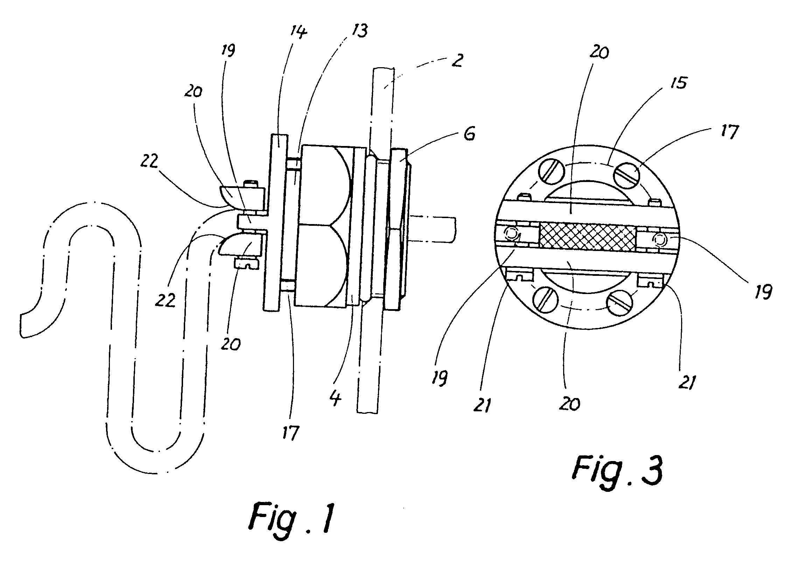

Der Ringflansch 14 trägt an seiner Stirnseite eine Zugentlastungseinrichtung, die aus zwei auf einem Radius einander gegenüberliegend, beidseitig des Flachkabels 1 angeordnete schmale Lagerstege 19 und zwei leistenartige Klemmstücke 20 aufweist, welche über Klemmschrauben 21 sowohl miteinander als auch mit den entsprechende Durchgangsbohrungen für die Klemmschrauben aufweisenden Lagerstege 19 verschraubt sind. Auf ihrer nach außen weisenden Seite sind die Klemmstücke 20 mit dem Flachkabel zugewandten abgerundeten Randflächen 22 ausgebildet, die ein scharfes Abknicken des dazwischen durchlaufenden Flachkabels 1 verhüten, wie dies aus Fig. 1 ohne weiteres verständlich ist.

Bei der Montage wird zunächst der mit dem Druckring 13 noch unverbundene Zwischenstutzen 4 in die Wandöffnung 3 des elektrischen Betriebsmittels eingeschraubt und dort fixiert. Dabei wird das Flachkabel 1 nicht mitgedreht, so daß auch keine montagebedingten Verdrillmomente auftreten, die das Flachkabel beschädigen könnten.

Anschließend wird der Druckring 13 mit dem Flachkabel 1 bezüglich des Zwischenstutzens 4 in eine Stellung gedreht, in der das Flachkabel 1 in der biegegünstigsten Lage steht. Sodann werden in miteinander fluchtende Bohrungen 16 und Gewindebohrungen 18 die Schraubenbolzen 17 eingesetzt, die radial außerhalb des Dichtringes 11 verlaufen und gleichmäßig um diesen herum verteilt sind. Beim Anziehen der Schraubenbolzen 17 wird der elastomere Druckring 11 zusammengedrückt, der damit das durchgehende Flachkabel 1 festklemmt und gleichzeitig eine einwandfreie Abdichtung an der Klemmstelle gewährleistet.

Schließlich werden die beiden Klemmschrauben 21 festgezogen, womit das Flachkabel 1 lagefest verklemmt wird und die an dem Druckring 11 erzeugte Dichtstelle zugentlastet ist. Die Stärke der Lagerstege 19 verhindert dabei ein zu starkes Klemmen und Beschädigen des Flachkabels 1, während die zylindrischen Schraubenbolzen 17 einen Verdrehschutz zwischen dem von dem Klemmstücken 20 gehaltenen Flachkabel 1 und dem ortsfesten Zwischenstutzen 4 bilden.

**Ansprüche**

1. Leitungseinführung für explosionsgeschützte Betriebsmittel zur zugentlasteten Einführung von nicht fest verlegten, insbesondere flexiblen Flachkabeln (1) in einen Raum der Explosions-Zündschutzart "erhöhte Sicherheit" eines elektrischen Betriebsmittels, mit einem zum Einsetzen in eine Wandöffnung des Raumes eingerichteten buchsenartigen Zwischenstutzen (4), der einen das Flachkabel umschließenden, verformbaren, gummielastischen Dichtring (11) aufnimmt, sowie mit einem unter Zusammendrücken des Dichtringes in Axialrichtung mit dem Zwischenstutzen verspannbaren koaxialen Druckring (13) und einer Zugentlastungseinrichtung (19,20), dadurch gekennzeichnet, daß der zylindrische Druckring (13) mit dem Zwischenstutzen (4) durch eine Anzahl achsparalleler, zylindrischer Schraubenbolzen (17) verbunden ist, die radial außerhalb des Dichtringes (11) auf einem gemeinsamen Teilkreis (15) liegend angeordnet sind, daß der Druckring (13) oder der Zwischenstutzen (4) die Wahl mehrerer Drehwinkelstellungen des Druckringes bezüglich des Zwischenstutzens ermöglichende zusätzliche Bohrungen (16;18) zur Aufnahme von Schraubenbolzen (17) aufweist, und daß der Druckring (13) die Zugentlastungseinrichtung (19,20, 21) trägt.

2. Leitungseinführung nach Anspruch 1, dadurch gekennzeichnet, daß der Druckring (13) einen Ringflansch (14) aufweist, in dem Bohrungen (16) zur Aufnahme der Schraubenbolzen (17) angeordnet sind.

3. Leitungseinführung nach Anspruch 1 oder 2, dadurch gekennzeichnet, daß die Zugentlastungseinrichtung zwei einander gegenüberliegend angeordnete, den Schmalseiten des durchgehenden Flachkabels (1) benachbarte schmale Lagerstege (19) aufweist, an denen zwei das Flachkabel (1) zwischen sich haltende Klemmstücke (20) befestigt sind.

4. Leitungseinführung nach Anspruch 3, dadurch gekennzeichnet, daß die Lagerstege (19) in ihrer Stärke auf die Dicke des Flachkabels (1) abgestimmt sind.

5. Leitungseinführung nach Anspruch 3 oder 4, dadurch gekennzeichnet, daß die flachen, leistenartigen Klemmstücke (20) auf ihrer dem Flachkabel (1) zugewandten Seite abgeschrägte oder-abgerundete Randflächen (22) aufweisen.

6. Leitungsinführung nach einem der vorhergehenden Ansprüche, dadurch gekennzeichnet, daß der Zwischenstutzen (4) durch eine aufgeschraubte Kontermutter (6) drehfest fixiert ist.

**Claims**

1. A cable lead-in for explosion-proof operating means, for the strain-relieved introduction of movable, more particularly flexible flat cables (1) into a space of "enhanced safety" explosion-proof grading in an electrical operating means, having: a bush-like intermediate connection piece (4) which is adapted for insertion into an aperture in the wall of said space and receives a deformable rubber-elastic sealing ring (11) enclosing the flat cable; a coaxial thrust ring (13) which can be tensioned with the intermediate connection piece in the axial direction to compress the sealing ring; and a strain-relieving device (19,20), characterized in that the cylindrical thrust ring (13) is connected to the intermediate connection piece (4) via a number of axis-parallel cylindrical screw bolts (17) disposed on a common pitch circle (15) radially outside the sealing ring (11); the thrust ring (13) or the intermediate connection piece (4) has for the reception of screw bolts (17) additional bores (16;18) permitting the choice of a number of angular positions of rotation of the thrust ring in relation to the intermediate connection piece; and the thrust ring (13) bears the strain-relieving device (19,20,21).

2. A cable lead-in according to claim 1, characterized in that the thrust ring (13) has an annular flange (14) in which bores (16) are disposed for receiving the screw bolts (17).

3. A cable lead-in according to claims 1 or 2, characterized in that the strain-relieving device has two oppositely disposed narrow bearing webs (19) which adjoin the narrow sides of the flat cable (1) passing through and to which two clamping members (20) retaining the flat cable (1) between themselves are attached.

4. A cable lead-in according to claim 3, characterized in that the thickness of the bearing webs (19) is adapted to the thickness of the flat cable (1).

5. A cable lead-in according to claims 3 or 4, characterized in that the flat, strip-like clamping members (20) have chamfered or rounded edge faces (22) on their sides adjacent the flat cable (1).

6. A cable lead-in according to one of the preceding claims, characterized in that the intermediate connection piece (4) is non-rotatably fixed by a screwed-on check nut (6).


**Revendications**

1. Entrée de câble pour matériel anti-explosion pour l'entrée avec atténuation de la traction de câbles volants, en particulier de câbles plats (1) flexibles, dans une chambre anti-explosion à protection accrue d'un matériel électrique, comportant un manchon intermédiaire (4) en forme de douille à monter dans une ouverture de paroi de la chambre, qui reçoit une bague d'étanchéité (11) en caoutchouc élastique, déformable entourant le câble plat, ainsi qu'une bague de pression (13) coaxiale pouvant être serrée avec le manchon intermédiaire en comprimant la bague d'étanchéité dans la direction axiale, et un dispositif d'atténuation de la traction (19, 20), caractérisée en ce que la bague de pression (13) cylindrique est reliée au manchon intermédiaire (4) au moyen d'un certain nombre de vis (17) cylindriques parallèles, disposées radialement à l'extérieur de la bague d'étanchéité (11) sur un cercle de perçages (15) commun, en ce que la bague de pression (13) ou le manchon intermédiaire (4) présente des perçages (16, 18) supplémentaires pour recevoir les vis (17), permettant de choisir plusieurs positions angulaires de la bague de pression par rapport au manchon intermédiaire, et en ce que la bague de pression (13) porte le dispositif d'atténuation de la traction (19, 20, 21).

2. Entrée de câble selon la revendication 1, caractérisée en ce que la bague de pression (13) présente une bride annulaire (14), dans laquelle sont aménagés des perçages (16) recevant les vis (17).

3. Entrée de câble selon la revendication 1 ou 2, caractérisée en ce que le dispositif d'atténuation de la traction présente deux pattes (19) étroites disposées en vis-à-vis sur le petit côté du câble plat (1) traversant, sur lesquelles sont fixés les éléments de blocage (20) tenant entre eux le câble plat (1).

4. Entrée de câble selon la revendication 3, caractérisée en ce que l'épaisseur des pattes (19) est en accord avec l'épaisseur du câble plat (1).

5. Entrée de câble selon la revendication 3 ou 4, caractérisée en ce que les éléments de blocage plats (20) en forme de barrettes comportent sur leur face tournée vers le câble plat (1) des surfaces périphériques (22) inclinées ou arrondies.

6. Entrée de câble selon l'une des revendications précédentes, caractérisée en ce que le manchon intermédiaire (4) est monté fixe en rotation au moyen d'un contre-écrou (6) vissé.

Fig.1

Fig.3

EP 0 180 014 B1

Fig. 2

EP 0 180 014 B1